# EUROPEAN PATENT APPLICATION

(11) **EP 1 712 435 A2**
(43) Date of publication of application: **18.10.2006**
(21) Application number: 06005221.4
(22) Date of filing: 14.03.2006
(51) Int. Cl.: B60R 22/44

(54) **Seat belt retractor, seat belt device, and vehicle with seat belt device**

(30) Priority: 14.04.2005 JP 2005117121; 20.04.2005 JP 2005122259
(71) Applicant: TAKATA CORPORATION, Minato-ku, Tokyo 106-8510 (JP)
(72) Inventor: Takao, Masato, Minato-ku Tokyo 106-8510 (JP); Tanaka, Koji, Minato-ku Tokyo 106-8510 (JP); Inzuka, Koji, Minato-ku Tokyo 106-8510 (JP)
(74) Representative: Vossius & Partner

(57) **Abstract**

A technology is provided which is useful in reducing the operational sound caused by the disconnecting operation of the power transmission mechanism in the seat belt retractor to be mounted on a vehicle in which the power transmission mechanism is switched from a connection state to a disconnection state by rotational speed difference between the electric motor and the spool so as to release the connection between the electric motor and the spool. In a seat belt retractor 1 of a seat belt device 100 mounted on a vehicle, the power transmission mechanism 8 is switched from a connection state to a disconnection state by rotational speed difference between the electric motor 6 and the spool 4 so as to release the connection between the electric motor 6 and the spool 4, and particularly, when the power transmission mechanism 8 is switched from the connection state to the disconnection state, the motor 6 is controlled to be rotated at an operational sound reducing speed corresponding to the switching operation (Fig. 2).

## Description

The present invention relates to a seat belt retractor mounted on a vehicle.

In the related art, there has been known a seat belt device, which protects a vehicle occupant by a seat belt (webbing) for restraining the vehicle occupant. For example, a structure of a seat belt retractor, which performs retracting operation and withdrawing operation of the seat belt by controlling an electric motor to rotate a spool, is disclosed in the PCT Japanese Translation Patent Publication No. 2003-507252 (Patent Document 1). The technology disclosed in the Patent Document 1 is the structure of the seat belt retractor, and provides possibility in which the retracting operation and withdrawing operation using the spool are performed by the electric motor. In addition, in the seat belt retractor in which the spool is operated by the electric motor, a power transmission mechanism is interposed between the electric motor and the spool, and the power transmission mechanism is switched from a connection state to a disconnection state by a rotational speed difference between the electric motor and the spool so that the connection between the electric motor and the spool is released.

In the structure in which the power transmission mechanism is interposed between the electric motor and the spool like the above-mentioned seat belt retractor, when the power transmission mechanism is switched from the connection state to the disconnection state, operational sound occurs due to the idle running of the electric motor.
The invention has been made to solve the above-mentioned problem, and it is an object of an aspect of the invention to provide a technology useful in reducing the operational sound caused by the disconnecting operation of the power transmission mechanism in the seat belt retractor to be mounted on a vehicle in which the power transmission mechanism is switched from a connection state to a disconnection state by rotational speed difference between the electric motor and the spool so as to release the connection between the electric motor and the spool.

The invention is configured to solve the above-mentioned problem. Although the invention can be typically applied to a seat belt retractor mounted on a vehicle such as an automobile, the invention can be applied to a vehicle other than the automobile, for example an airplane, a ship, an electric train, etc.

### (A first aspect of the invention)

A first aspect of the invention for solving the above-mentioned problem is a seat belt retractor disclosed in claim 1.
The seat belt retractor includes at least a spool, an electric motor, a power transmission mechanism, and a control unit.

The spool of the first aspect of the invention includes a member for retracting or withdrawing the seat belt. The seat belt to be retracted or withdrawn by the spool is a long belt fastened about a vehicle occupant, and is called as a 'webbing'. Typically, since the seat belt restrains the vehicle occupant seated in a vehicle seat during the vehicle collision, the vehicle occupant can be protected.

The power transmission mechanism of the first aspect of the invention includes a mechanism that is interposed between the electric motor and the spool and forms a connection state in which the electric motor and the spool are connected to each other and a disconnection state in which the connection state is released. The power transmission mechanism is called a 'clutch' in which gear members are combined.
The connection state of the power transmission mechanism is a state in which the spool is mechanically connected to the power transmission mechanism so that the power of the electric motor can be transmitted to the spool through the power transmission mechanism. Accordingly, when the electric motor is driven in the connection state, the power of the electric motor is transmitted to the spool through the power transmission mechanism. In addition, when the electric motor is stopped in the connection state, the power of the electric motor is not transmitted to the spool. However, since a high withdrawal resistance is applied to the spool due to the power transmission mechanism mechanically connected to the spool, the state in which withdrawal of the seat belt from the spool is regulated is formed. Specifically, in this state, it is difficult to or it is impossible to withdraw the seat belt.
Correspondingly, in the disconnection state of the power transmission mechanism, since a withdrawal resistance from the power transmission mechanism mechanically disconnected to the spool is lowered regardless of the driving or stop of the electric motor, it is possible to easily withdraw the seat belt from the spool.

The control unit of the first aspect of the invention includes a unit that controls the electric motor and the power transmission mechanism, and controls the electric motor to be switched between the driving and the stop. Furthermore, the control unit controls the power transmission mechanism to be switched between the connection state and the disconnection state. The control unit is typically composed of a CPU (central processing unit), input and output units, a memory unit, peripheral units, etc. The control unit may be dedicatedly provided to the seat belt retractor, or may be used both as another control unit for controlling a driving system or an electrical system of a vehicle.
Moreover, in the present invention, when the electric motor is controlled to be rotated in a first direction in the connection state of the power transmission mechanism, the spool is controlled to be rotated in the belt retracting direction and the seat belt is retracted. When the electric motor is controlled to be rotated in a second direction opposite to the first direction so as to switch the power transmission mechanism from the connection state to the disconnection state, the power transmission mechanism is switched from the connection state to the disconnection state by rotational speed difference between the electric motor and the spool.

In the structure in which the power transmission mechanism is switched from the connection state to the disconnection state by rotational speed difference between the electric motor and the spool like the seat belt retractor of the first aspect of the invention, when the power transmission mechanism is switched from the connection state to the disconnection state, operational sound occurs due to the idle running of the electric motor.
Accordingly, in the invention, in order to reduce the operational sound caused by the switching operation of the power transmission mechanism, when the power transmission mechanism is switched from the connection state to the disconnection state, the control unit controls the electric motor so that the electric motor is rotated in the second direction at an operational sound reducing speed corresponding to the switching operation. The operational sound reducing speed is defined as a speed useful in reducing the operational sound, which is caused by the switching operation of the power transmission mechanism, and can be properly set in accordance with the assumed operational sound level. In addition, the operational sound reducing speed may have a specific speed value or may have any speed values within the predetermined speed range.
According to the structure of the seat belt retractor disclosed in claim 1, it is possible to reduce the operational sound caused by the disconnecting operation of the power transmission mechanism.

A second aspect of the invention for solving the above-mentioned problem is a seat belt retractor disclosed in claim 2.
The seat belt retractor disclosed in claim 2 further includes a detecting unit in addition to the structure disclosed in claim 1. The detecting unit includes a unit capable of detecting whether the power transmission mechanism is in the connection state or the disconnection state. A structure in which a state of the power transmission mechanism is detected on the basis of the motor load corresponding to a detected current value detected by a sensor for detecting a current value of the electric motor, or a structure using a hole IC can be used properly for the detecting unit.
In addition, when it is discriminated that the power transmission mechanism is in the connection state, the control unit controls the electric motor so that the electric motor is rotated in the second direction at a higher speed than the operational sound reducing speed.
According to the structure of the seat belt retractor disclosed in claim 2, it is possible to reduce the operational sound caused by the disconnecting operation of the power transmission mechanism, and to reliably switch the power transmission mechanism to the disconnection state. That is, assuming that the occupant applies a tensile force to the seat belt and thus the spool is rotated in the belt withdrawing direction, since the rotational speed difference between the electric motor and the spool does not occur sometimes, the power transmission mechanism may not be switched to the disconnection state. However, the second aspect of the invention is useful in reliably switching the power transmission mechanism to the disconnection state.

A third aspect of the invention for solving the above-mentioned problem is a seat belt retractor disclosed in claim 3.
In the seat belt retractor disclosed in claim 3, the detecting unit disclosed in claim 2 includes a motor current detector for detecting a current value of the electric motor. In addition, when the current value detected by the motor current detector is larger than a reference current value, since load of the motor is relatively high, the control unit discriminates that the power transmission mechanism is in the connection state. In the meantime, when the current value detected by the motor current detector is smaller than the reference current value, since load of the motor is relatively low, the control unit discriminates that the power transmission mechanism is in the disconnection state. Accordingly, the reference current value is properly set on the basis of the motor current value when the power transmission mechanism is in the connection state, or the motor current value when the power transmission mechanism is in the disconnection state.
Therefore, according to the structure of the seat belt retractor disclosed in claim 3, it is possible to use the motor current detector for detecting the current value of the electric motor as a unit for detecting whether the power transmission mechanism is in the connection state or the disconnection state.

A fourth aspect of the invention for solving the above-mentioned problem is a seat belt device disclosed in claim 4.
The seat belt device disclosed in claim 4 includes at least a seat belt, a spool, an electric motor, a power transmission mechanism, and a control unit. The seat belt is a long belt fastened about a vehicle occupant, and is called as a 'webbing'. Typically, since the seat belt restrains the vehicle occupant seated in a vehicle seat during the vehicle collision, the vehicle occupant can be protected. The spool, the electric motor, the power transmission mechanism, and the control unit of the fourth aspect of the invention are the substantially the same as those of the seat belt retractor of the first aspect of the invention.
Therefore, according to the fourth aspect of the invention, it is possible to provide a seat belt device capable of reducing the operational sound caused by the disconnecting operation of the power transmission mechanism.

A fifth aspect of the invention for solving the above-mentioned problem is a seat belt device disclosed in claim 5.
The seat belt device disclosed in claim 5 further includes a detecting unit in addition to the structure disclosed in claim 4. The detecting unit includes a unit capable of detecting whether the power transmission mechanism is in the connection state or the disconnection state. A structure in which a state of the power transmission mechanism is detected on the basis of the motor load corresponding to the detected current value detected by use of a sensor for detecting a current value of the electric motor, or a structure using a hole IC can be used properly for the detecting unit.
In addition, when it is discriminated that the power transmission mechanism is in the connection state, the control unit controls the electric motor so that the electric is rotated in the second direction at a higher speed than the operational sound reducing speed.
According to the structure of the seat belt device disclosed in claim 5, it is possible to reduce the operational sound caused by the disconnecting operation of the power transmission mechanism, and to reliably switch the power transmission mechanism to the disconnection state. That is, assuming that the occupant applies a tensile force to the seat belt and thus the spool is rotated in the belt withdrawing direction, since the rotational speed difference between the electric motor and the spool does not occur sometimes, the power transmission mechanism may not be switched to the disconnection state. However, the fifth aspect of the invention is useful in reliably switching the power transmission mechanism to the disconnection state.

A sixth aspect of the invention for solving the above-mentioned problem is a seat belt device disclosed in claim 6.
In the seat belt device disclosed in claim 6, the detecting unit disclosed in claim 5 includes a motor current detector for detecting a current value of the electric motor. In addition, when the current value detected by the motor current detector is larger than a reference current value, since load of the motor is relatively high, the control unit discriminates that the power transmission mechanism is in the connection state. In the meantime, when the current value detected by the motor current detector is smaller than the reference current value, since load of the motor is relatively low, the control unit discriminates that the power transmission mechanism is in the disconnection state. Accordingly, the reference current value is properly set on the basis of the motor current value when the power transmission mechanism is in the connection state, or the motor current value when the power transmission mechanism is in the disconnection state.
Therefore, according to the structure of the seat belt device disclosed in claim 6, it is possible to use the motor current detector for detecting the current value of the electric motor as a unit for detecting whether the power transmission mechanism is in the connection state or the disconnection state.

A seventh aspect of the invention for solving the above-mentioned problem is a vehicle with a seat belt device disclosed in claim 7.
The vehicle with the seat belt device disclosed in claim 7 includes at least the seat belt device disclosed in any one of claims 4 to 6. The vehicle of the seventh aspect of the invention has the seat belt device received in the receiving space of the vehicle, for example, the receiving space within a pillar, the receiving space within a seat, or the receiving space of other portions of the vehicle.
According to the structure of the vehicle with the seat belt device, it is possible to provide a vehicle with a seat belt device, which can reduce the operational sound caused by the disconnecting operation of the power transmission mechanism, in the receiving space of the vehicle.

As described above, according to the invention, in the seat belt retractor, the power transmission mechanism is switched from the connection state to the disconnection state by rotational speed difference between the electric motor and the spool so that the connection between the electric motor and the spool is released. Particularly, when the power transmission mechanism is switched from the connection state to the disconnection state, the motor is controlled to be rotated at an operational sound reducing speed corresponding to the switching operation. Therefore, it is possible to reduce the operational sound caused by the disconnecting operation of the power transmission mechanism.

Fig. 1 is a view showing a structure of a seat belt device 100 according to an embodiment of the invention;
Fig. 2 is a view showing a peripheral structure of a seat belt retractor 1 shown in Fig. 1;
Fig. 3 is an exploded perspective view showing the seat belt retractor 1 according to the embodiment of the invention;
Fig. 4(a) is a perspective view showing a state in which a retainer cover is removed from the seat belt retractor 1 shown in Fig. 3, and Fig. 4(b) is a left side view of Fig. 4(a);
Fig. 5(a) is a perspective view showing a sun gear member used in the seat belt retractor 1 shown in Fig. 3, and Fig. 5(b) is a perspective view showing the sun gear member as seen from the IIIB side of Fig. 5(a);
Fig. 6 is a left side view without parts of components showing a state in which the seat belt retractor 1 shown in Fig. 3 is in a power interruption mode;
Fig. 7 is a left side view without parts of components showing a state in which the seat belt retractor 1 shown in Fig. 3 is in a low speed reduction ratio power transmission mode;
Fig. 8 is a left side view without parts of components showing a state in which the seat belt retractor 1 shown in Fig. 3 is in a high speed reduction ratio power transmission mode; and
Fig. 9 is a flow chart showing retractor control processing of the seat belt retractor 1 of the present embodiment. In the following description, as long as it is particularly not limiting, 'left' and 'right' indicate 'left' and 'right' in the drawings used for the description. Furthermore, 'clockwise direction' and 'counter-clockwise direction' indicate 'clockwise direction' and 'counter-clockwise direction' in the drawings used for the description.
Hereinafter, embodiments of the invention will be described in detail with reference to the drawings. First, an embodiment of the invention will be described with reference to Figs. 1 to 4.

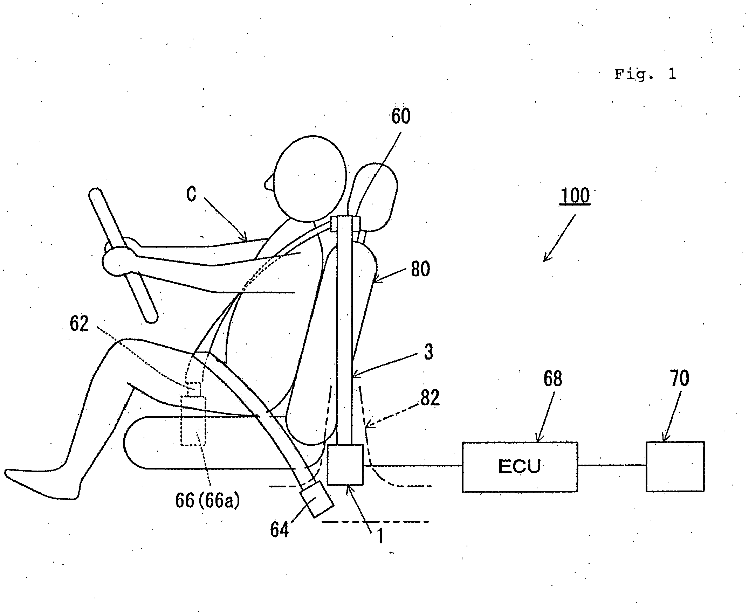

As shown in Fig. 1, the seat belt device 100 of the present embodiment is a seat belt device for a vehicle, which is mounted on a vehicle as a 'vehicle with a seat belt device', and is mainly formed of a seat belt retractor 1, a seat belt 3, and an ECU 68. In addition, a vehicle is provided with an input element 70. The input element 70 detects various information, such as information about a collision prediction or collision occurrence of the vehicle, a driving state of the vehicle, a seating position or a physique of a vehicle occupant seated on the seat, surrounding traffic conditions, and weather or time zones. Then, the input element 70 inputs the detection information to the ECU 68. The detection information of the input element 70 is transmitted to the ECU 68 at all times or in every predetermined time so that the detection information of the input element 70 is to be used for controlling operation of the seat belt device 100 or the like.

A seat belt 3 is a long belt (webbing), which is used for restraining or releasing the vehicle occupant C seated on the vehicle seat 80 serving as a driver's seat. The seat belt 3 corresponds to a 'seat belt' of the invention. The seat belt 3 is extracted from a seat belt retractor 1 fixed to the vehicle, and is connected to an out anchor 64 through a shoulder guide anchor 60 provided in the portion corresponding to the shoulder of the vehicle occupant C and through a tongue 62. The shoulder guide anchor 60 functions to lock and guides the seat belt 3 in the portion corresponding to the shoulder of the vehicle occupant C. The seat belt 3 is fastened about the vehicle occupant C by inserting the tongue 62 into a buckle 66 fixed to the vehicle body. Furthermore, the buckle 66 is provided with a buckle switch 66a, and the buckle switch 66a detects the operation of the seat belt buckle (the mounted state of the seat belt) by detecting insertion of the tongue 62 into a buckle 66.

The seat belt retractor 1 is a unit capable of retracting and withdrawing the seat belt 3 via a spool 4 to be described below, and corresponds to a 'seat belt retractor' of the invention. As shown in Fig. 1, the seat belt retractor 1 is mounted in the receiving space, which is formed in a B pillar 82 of the vehicle.

The ECU 68 has a function to control the seat belt retractor 1 and various operating mechanisms on the basis of signals from the input element 70, and is formed of a CPU (central processing unit), input and output units, a memory unit, peripheral units, etc. In the description of the present embodiment, in particular, the ECU 68 controls a motor 6, to be described below, of the seat belt retractor 1. Specifically, since the ECU 68 controls a supply amount or a supply direction of the current supplied to an electromagnetic coil of the motor 6, the rotational speed and the rotational direction of a motor shaft are varied. As described in detail below, the ECU 68 controls the driving of the motor 6 and serves as units for switching a state, in which a driving force of the motor 6 is transmitted to the spool 4, by controlling a power transmission mechanism 8 and a power transmission mode switching mechanism 9. The ECU 68 corresponds to a 'control unit' of the present invention. The seat belt retractor 1 is controlled to be switched to a power interruption mode, a low speed reduction ratio power transmission mode, or a high speed reduction ratio power transmission mode by the ECU 68. In addition, the ECU 68 may be dedicatedly provided to the seat belt retractor 1, or may be used both as another control unit for controlling a driving system or an electrical system of the vehicle.

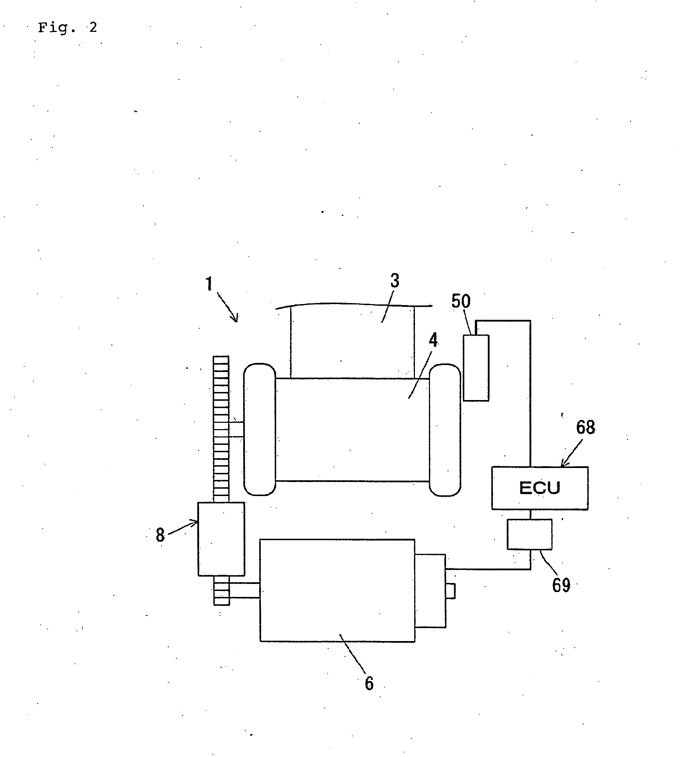

Furthermore, as shown in Fig. 2, the seat belt retractor 1 is provided with a detecting sensor 50 for directly detecting information on the rotation of the spool 4. The detecting sensor 50 is a sensor for detecting operational information on the rotation of the spool 4. The motor 6 can be controlled by the ECU 68 on the basis of the detection information detected by the detecting sensor 50. Whether or not the spool 4 is rotated, rotational angle, rotational direction, rotational speed, amount of the rotation can be appropriately used as the detection information detected by the detecting sensor 50. A sensor such as a hall sensor, volume sensor, photo interrupter can be appropriately used as the detecting sensor 50.

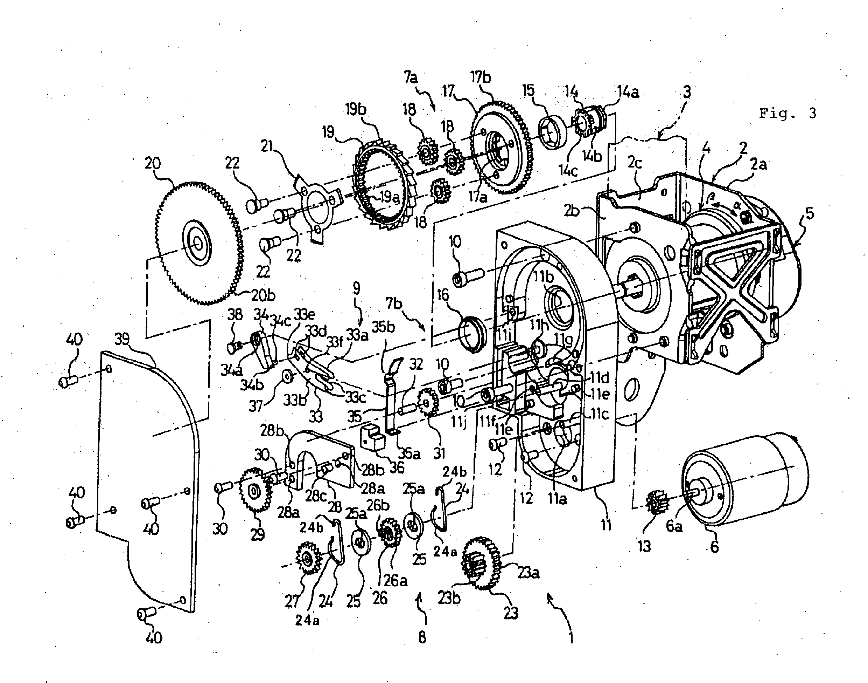

Hereinafter, the seat belt retractor 1 according to the present embodiment will be described in detail.
As shown in Fig. 3, the seat belt retractor 1 mainly includes a frame 2, a seat belt 3 for restraining the vehicle occupant as needed, a spool 4 for retracting the seat belt 3, a lock unit 5 which is provided on one side of the frame 2 and is operated to prevent the spool 4 from being rotated in the belt withdrawing direction α at the time of occurrence of a deceleration larger than a predetermined deceleration such as a collision, a motor 6 for generating rotational torque to be applied to the spool 4, a power transmission mechanism 8, and a power transmission mode switching mechanism 9. The power transmission mechanism 8 has a speed reduction mechanism 7a having a high speed reduction ratio which reduces the rotational speed of the motor 6 at a relatively high speed reduction ratio and then transmits the rotational speed to the spool 4, and a speed reduction mechanism 7b having a low speed reduction ratio which reduces the rotational speed of the motor 6 at a relatively low speed reduction ratio and then transmits the rotational speed to the spool 4. The power transmission mechanism 8 has a first power transmission path and a second power transmission path set therein so as to selectively transmit the rotational torque of the motor 6 to the spool 4 through any one of the first power transmission path and the second power transmission path. The power transmission mode switching mechanism 9 selectively switches the power transmission mechanism 8 to any one of the first power transmission path and the second power transmission path.

The power transmission mechanism 8 and the power transmission mode switching mechanism 9 are provided between the motor 6 and the spool 4 to construct a unit (so-called a clutch) for forming a connection state or a disconnection state between the motor 6 and the spool 4, and correspond to a 'power transmission mechanism' of the invention. In the connection state, the power of the motor 6 can be transmitted to the spool 4, and the driving force of the motor 6 is transmitted to the spool 4 by driving the motor 6. Furthermore, in the connection state, when the motor 6 is stopped, a large withdrawal resistance is applied to the spool 4. Therefore, the seat belt enters into a state in which a withdrawal thereof from the spool is regulated. Correspondingly, in the disconnection state, the seat belt 3 can be easily withdrawn from the spool 4 due to the withdrawal resistance being lowered.

The frame 2 is formed of a pair of sidewalls 2a and 2b that are disposed parallel to each other, and a backboard 2c for connecting the sidewalls 2a and 2b to each other. The spool 4 for retracting the seat belt 3 is rotatably provided between the sidewalls 2a and 2b in the frame 2. A spool of the seat belt retractor 1, which is known in the related art, can be used as the spool 4. The spool 4 includes a member for retracting and withdrawing the seat belt, and corresponds to a 'spool' of the invention.

A lock unit 5 is mounted on one sidewall 2a. A lock unit of a seat belt retractor, which is known in the related art, can be used as the lock unit 5. That is, when a vehicle sensor (deceleration detecting sensor) detects that the deceleration applied to the vehicle is larger than a predetermined deceleration, or when a webbing sensor (belt withdrawal speed detecting sensor) detects that a withdrawal speed of the seat belt 3 is higher than a predetermined speed, the lock unit 5 is operated to prevent the spool 4 from rotating in the belt withdrawing direction α.

Furthermore, although not shown, a force limiter mechanism (energy absorbing mechanism: hereinafter referred to as an EA mechanism), which is known in the related art, is provided between the spool 4 and the lock unit 5. When the seat belt 3 is prevented from withdrawing by the lock unit 5, the force limiter mechanism limits load of the seat belt 3. For example, a torsion bar, which is known in the related art, can be used as the EA mechanism. When the seat belt 3 is prevented from withdrawing by the operation of the lock unit 5, the torsion bar is twisted and deformed so that the load of the seat belt 3 is limited and impact energy is absorbed.

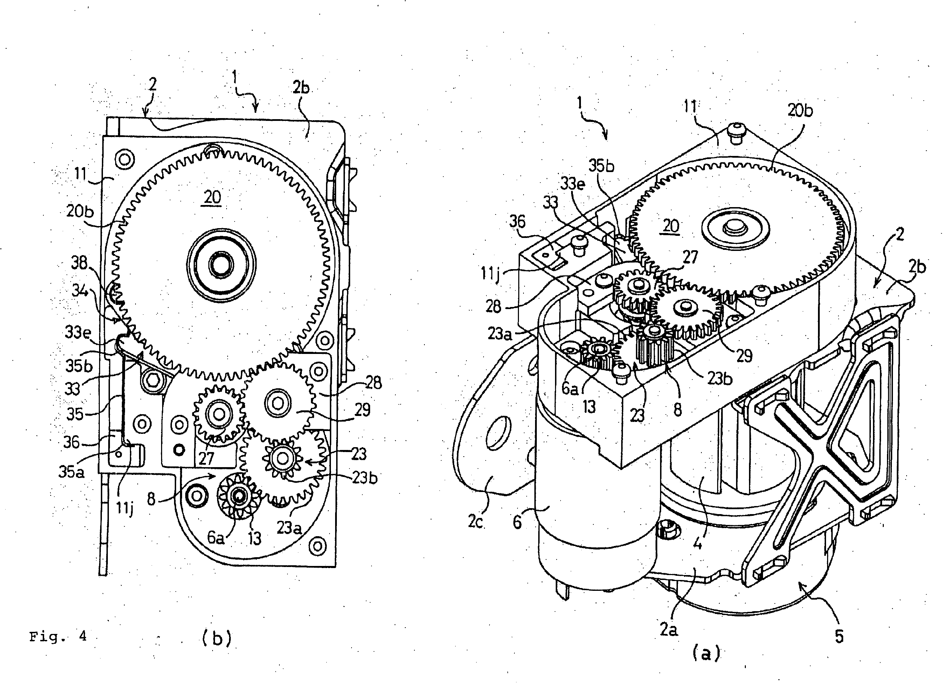

As shown in Figs. 3 and 4(a), the motor 6 is mounted on the surface of the retainer 11 facing the frame 2 with a pair of screws 12. In this case, the retainer 11 is mounted on the other sidewall 2b of the frame 2 with three screws 10. A motor rotary shaft 6a of the motor 6 passes through a through hole 11a of the retainer 11, and a motor gear 13 having external teeth is mounted on the motor rotary shaft 6a, which protrudes toward the opposite side to the surface of the retainer 11 facing the frame 2, to be rotated with the motor rotary shaft 6a as one unit. The motor 6 is composed an electric motor and corresponds to an 'electric motor' of the invention.

As shown in Fig. 3, a connector 14 is provided between both the spool 4 and the above-mentioned EA mechanism (for example, a torsion bar), and the speed reduction mechanisms 7a and 7b for connecting these in the rotational direction. The connector 14 includes a first rotatable connecting part 14a that is connected to both the spool 4 and the EA mechanism in the rotational direction thereof, a second rotatable connecting part 14b that is connected to a connector bearing 15 in the rotational direction thereof, and a third rotatable connecting part 14c that is formed in a spline shape and is connected to the speed reduction mechanisms 7a and 7b in the rotational direction thereof.

Although not clearly shown in Fig. 3, the first rotatable connecting part 14a is formed in a polygonal tube shape. An outer surface of the first rotatable connecting part 14a is connected to the spool 4 so as to be rotated with the spool 4 as one unit, and an inner surface of the first rotatable connecting part 14a is connected to the EA mechanism (for example, a torsion bar) so as to be rotated with the EA mechanism as one unit (since the rotatable connection structure between the first rotatable connecting part 14a and the connector 14, the spool 4, and the EA mechanism are known in the related art, the detailed description thereof is omitted).

The outer surface of the second rotatable connecting part 14b is formed in a polygonal shape, and the inner surface of the connector bearing 15 is formed in the same polygonal shape as the outer surface thereof. The connector bearing 15 is fitted to the second rotatable connecting part 14b so as to be mounted on the connector 14 so that the connector bearing 15 cannot be rotated relative to the connector 14. Since the connector bearing 15 is rotatably supported relative to a retainer bearing 16 which is mounted in a hole 11b of the retainer 11 so as not to be capable of relative rotation, the connector 14 is rotatably supported in the retainer 11.
The third rotatable connecting part 14c has predetermined numbers of engaging grooves, such as spline grooves, which extend in the axial direction thereof, at regular intervals in the circumferential direction thereof.

The speed reduction mechanism 7a having a high speed reduction ratio includes an annular carrier gear 17, predetermined numbers (three in Fig. 3) of planet gears 18 rotatably mounted on the carrier gear 17, an annular ring member 19, and a sun gear member 20.
Predetermined numbers of engaging grooves, such as spline grooves, which extend in the axial direction thereof, are formed on the inner circumferential surface 17a of the carrier gear 17 facing the connector 14 in the circumferential direction thereof at regular intervals. The engaging grooves formed on the inner circumferential surface 17a are engaged with protrusions formed between the engaging grooves of the third rotatable connecting part 14c, and protrusions formed between the engaging grooves of the inner circumferential surface 17a are engaged with the engaging grooves of the third rotatable connecting part 14c (engagement such as spline engagement). Accordingly, the carrier gear 17 is connected to the connector 14 so as not to be rotated relative to the connector 14, that is, to be rotated with the connector 14 as one unit. In addition, external teeth 17b are formed on the outer circumferential surface of the carrier gear 17.

The planet gears 18 are rotatably mounted on the carrier gear 17 with the speed reduction pins 22 with a speed reduction plate 21 interposed therebetween.
The ring member 19 has an internal gear 19a formed on the inner circumferential surface thereof and ratchet teeth 19b formed on the outer circumferential surface thereof, and the internal gear 19a and the ratchet teeth 19b are rotated as one unit.

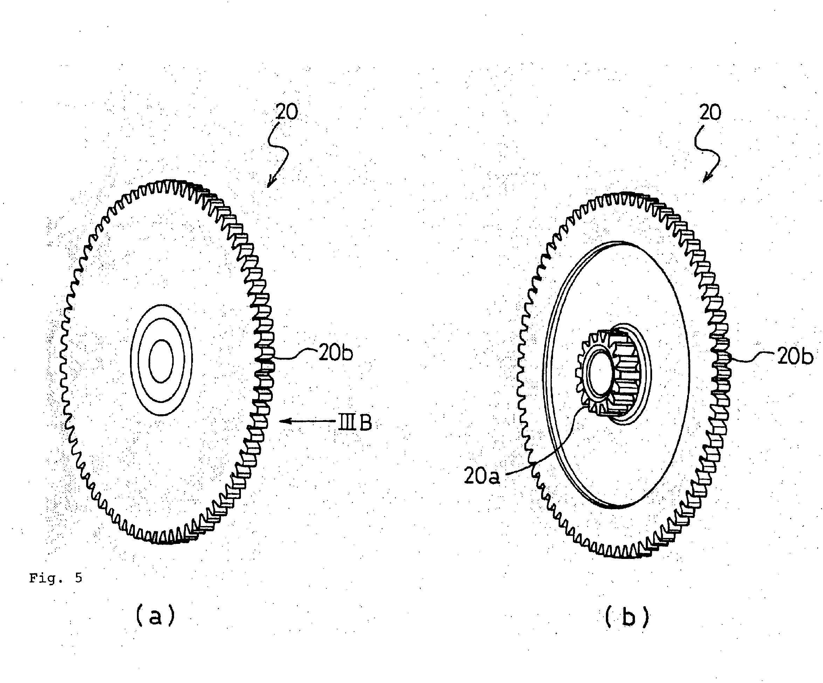

As shown in Figs. 5(a) and 5(b), the sun gear member 20 is provided with a sun gear 20a, which is composed of small diametric external teeth, and large diametric external teeth 20b, and the sun gear 20a and the external teeth 20b are rotated as one unit.
When each of the planet gears 18 supported on the carrier gear 17 are always engaged with both the sun gear 20a and the internal gear 19a, the planetary mechanism is constructed. Accordingly, the speed reduction mechanism 7a having a high speed reduction ratio is composed of a planetary gear speed reduction mechanism in which an output of the carrier gear 17 is obtained by an input of the sun gear 20a.

In addition, as shown in Fig. 3, the power transmission mechanism 8 includes a connector gear 23, a pair of clutch springs 24, a pair of pulleys 25, a lower connector gear 26 having external teeth, an upper connector gear 27 having external teeth, a guide plate 28, and an idle gear 29 having external teeth.
The connector gear 23 is rotatably supported by a rotary shaft 11c that stands on the retainer 11, and includes a first connector gear 23a that is composed of large diametric external teeth, with a small diametric second connector gear 23b. The first and second connector gears 23a and 23b are rotated with each other as one unit. In this case, as shown in Figs. 4(a) and 4(b), the large diametric first connector gear 23a is always engaged with the motor gear 13.

As shown in Fig. 3, rotary shafts 26a (only one rotary shaft 26 is shown in Fig. 3) protrude on both surfaces of the lower connector gear 26, and a through hole 26b is formed to pass through the rotary shafts 26a in the axial direction thereof. Each of the rotary shafts 26a is formed with flat portions, and is inserted into the slot 25a of the corresponding pulleys 25 so that the flat planes of the flat portions are fitted in the slot. For this reason, the pulleys 25 are supported on both surfaces of the lower connector gear 26 to be rotated with the lower connector gear 26 as one unit. First curved locking portions 24a of the clutch springs 24 are locked on the pulleys 25. Furthermore, the upper connector gear 27 is supported on one rotary shaft 26a of the lower connector gear 26 to be rotated with the lower connector gear 26 as one unit. The pulleys 25, the lower connector gear 26, and the upper connector gear 27 are rotatably supported by a rotary shaft 11d that stands on the retainer 11.

A pair of supporting shafts 11e, which stand on the retainer 11, are correspondingly inserted into a pair of holes 28a formed on the guide plate 28, respectively so that the guide plate 28 is supported by the supporting shafts 11e. Then, a pair of screws 30 are fastened into a pair of screw holes 11f, which are formed on the retainer 11, through corresponding screw holes of the guide plate 28 so as to mount the guide plate 28 on the retainer 11. The idle gear 29 is rotatably supported on a rotary shaft 28c that stands on the guide plate 28.
As shown in Figs. 4(a) and 4(b), the idle gear 29 is always engaged with all of the external teeth 20b of the sun gear member 20, the small diametric second connector gear 23b of the connector gear 23, and the upper connector gear 27.

Furthermore, the speed reduction mechanism 7b having a low speed reduction ratio includes the upper connector gear 27, the lower connector gear 26, a clutch gear 31, and the carrier gear 17.
Accordingly, the rotational torque of the motor 6 transmitted to the idle gear 29 is transmitted to the spool 4 from the idle gear 29 through the speed reduction mechanism 7b having a low speed reduction ratio, or is transmitted to the spool 4 from the idle gear 29 through the speed reduction mechanism 7a having a high speed reduction ratio.

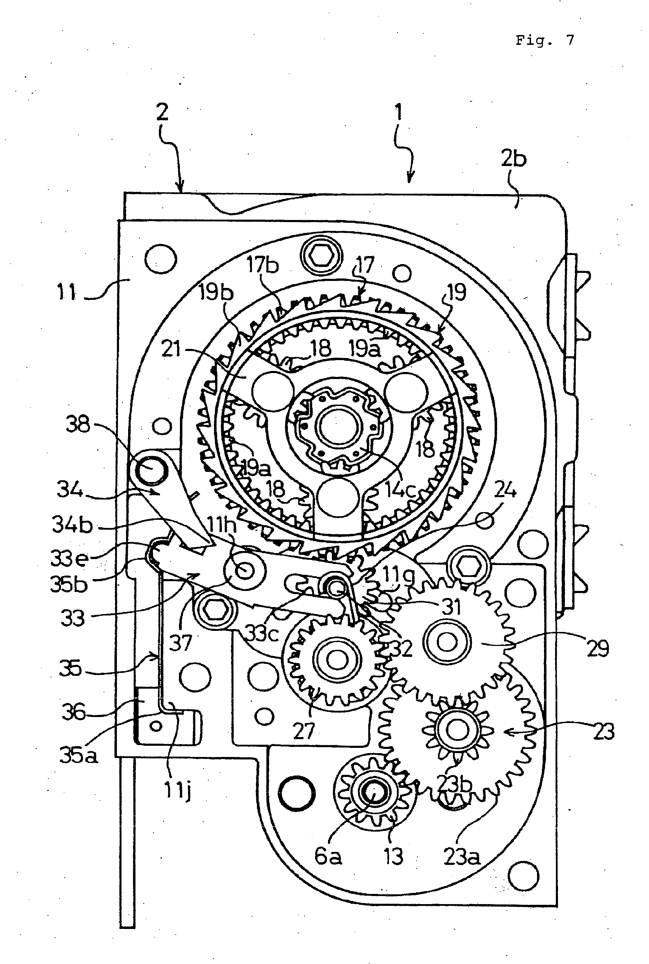

As shown in Fig. 3, the power transmission mode switching mechanism 9 includes a clutch gear 31 having external teeth, a rotary shaft 32, a clutch arm 33, a clutch pawl 34, a resistance spring 35, and a spring stopper 36.
As shown in Fig. 7, the clutch gear 31 can be engaged with the external teeth 17b of the carrier gear 17, which has a diameter larger than that of the clutch gear 31. Furthermore, although not shown, the clutch gear 31 is always engaged with the lower connector gear 26. The clutch gear 31 is rotatably supported by the rotary shaft 32, which passes through a central hole 31a of the clutch gear 31.

The clutch arm 33 includes both sidewalls 33a and 33b, and a bottom portion (not shown) so as to have a U-shaped cross-section. One end of the both sidewalls 33a and 33b protrudes from the bottom portions thereof, and the protruding portions have corresponding linear supporting grooves 33c. In addition, the clutch gear 31 is disposed between the protrusions of the sidewalls 33a and 33b, and both ends of the rotary shaft 32, which protrude from both surfaces of the clutch gear 31 are supported by the corresponding supporting grooves 33c so as to be moved along the supporting grooves 33c. Further, second curved locking portions 24b of the clutch springs 24 are locked on protruding portions of the rotary shaft 32, which protrude from the sidewalls 33a and 33b. Furthermore, one end of the rotary shaft 32 is inserted into a guide hole 11g, which is formed through the retainer 11, so as to be supported. The guide hole 11g has a shape of an arc of a circle whose center is on the axis of the rotary shaft 11d. Accordingly, the rotary shaft 32 is guided by the guide hole 11g so as to be movable along the circumference of the circle whose center is on the axis of the rotary shaft 11d.

Moreover, the other ends of the sidewalls 33a and 33b are provided with slots 33d and a substantially circular arc shaped engaging portion 33e. Supporting holes 33f are formed through the sidewalls 33a and 33b in the middle thereof in the longitudinal direction. A supporting shaft 11h standing on the retainer 11 is inserted into the supporting holes 33f so that the clutch arm 33 is rotatably supported, and the supporting shaft 11h is provided with an E-ring 37 mounted thereon so as not to be separated from the supporting holes 33f.

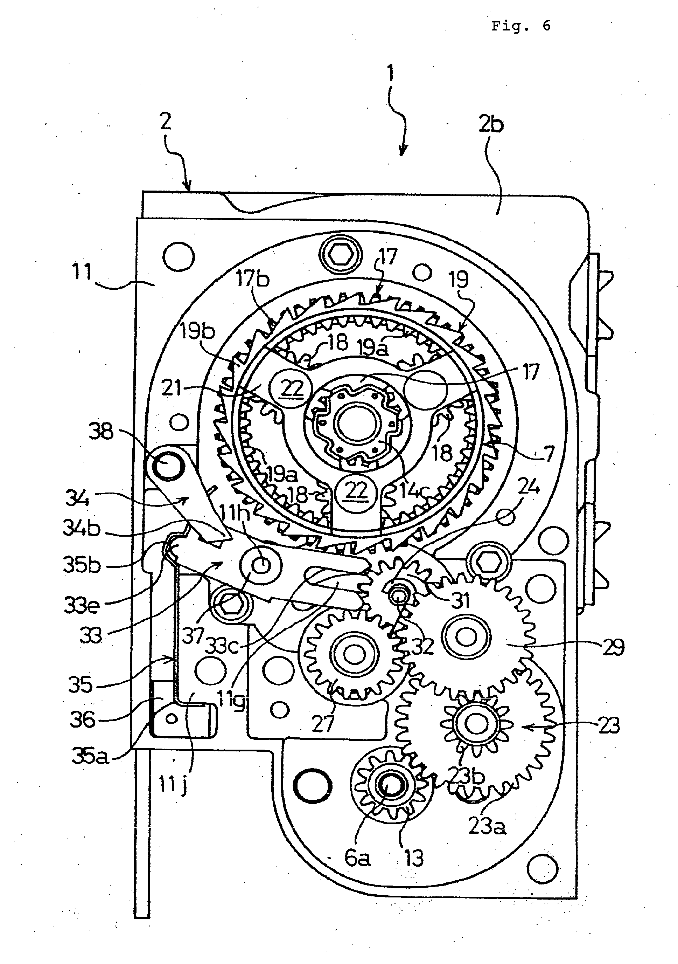

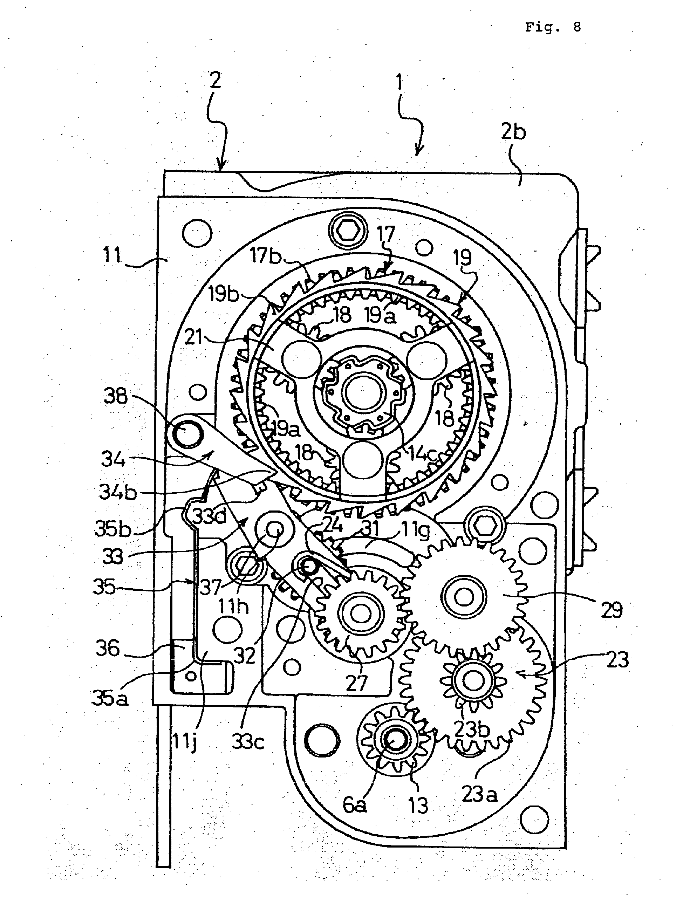

A supporting hole 34a is formed at one end of the clutch pawl 34, and an engaging hook 34b is formed at the other end thereof. In addition, an engaging pin 34c is provided to stand at the other end of the clutch pawl 34, that is, on the side of the engaging hook 34b. The engaging pin 34c is inserted into the slot 33d of the clutch arm 33, and can be rotated relative to the clutch arm 33 and be relatively moved along the slot 33d. As shown in Fig. 6, the clutch pawl 34 is rotatably mounted on the retainer 11 by inserting a pawl pin 38 into a pin hole 11i of the retainer 11 through the supporting hole 34a. Then, as shown in Fig. 8, the engaging hook 34b can be engaged with the ratchet teeth 19b against the clockwise rotation of the ring member 19 (which corresponds to the belt withdrawing direction α). For this reason, when the engaging hook 34b is engaged with the ratchet teeth 19b, the ring member 19 is not rotated in the clockwise direction.

The resistance spring 35 is composed of a strip-shaped leaf spring. The resistance spring 35 has a supporting portion 35a, which is formed in an L shape, at the lower end thereof, and a U-shaped recess 35b on the upper portion thereof above the center of the longitudinal axis. A portion of the resistance spring 35 between the recess 35b and the supporting portion 35a is formed in a plane shape, and a portion thereof between the recess 35b and the upper end is formed in a curved shape.
The engaging portion 33e of the clutch arm 33 is engaged with the recess 35b and can be disengaged. As shown in Fig. 6, in a state in which the engaging portion 33e is engaged with the recess 35b, the extending direction of the supporting groove 33c is the tangential direction of the circular arc of the guide hole 11g, and the rotary shaft 32 can be moved from the guide hole 11g to the supporting groove 33c, or from the supporting groove 33c to the guide hole 11g.

The spring stopper 36 is formed in an L shape. The supporting portion 35a is interposed between the spring stopper 36 and a spring mounting portion 11j formed on the retainer 11 so that the resistance spring 35 is supported on the retainer 11 with the upper end thereof as a free end.
Each of components of the speed reduction mechanisms 7a and 7b, the power transmission mechanism 8, and the power transmission mode switching mechanism 9 to be described above is assembled in the recess, which is formed, on the opposite side to the surface of the retainer 11 facing the frame 2. After that, a retainer cover 39 is mounted on the opposite side of the retainer 11 with a predetermined number (four in Fig. 3) of screws 40 so as to cover the components.

The power transmission mechanism 8 and the power transmission mode switching mechanism 9, which have the above-mentioned structure, are controlled by the ECU 68 to be switched to the following three modes. The three modes will be described with reference to Figs. 6 to 8. Here, Fig. 6 is a left side view without parts of components showing a state in which the seat belt retractor shown in Fig. 3 is in a power interruption mode. Fig. 7 is a left side view without parts of components showing a state in which the seat belt retractor shown in Fig. 3 is in a low speed reduction ratio power transmission mode. Furthermore, Fig. 8 is a left side view without parts of components showing a state in which the seat belt retractor shown in Fig. 3 is in a high speed reduction ratio power transmission mode.

### (1) The Power Interruption Mode (Free Mode)

As shown in Fig. 6, in the power interruption mode, the engaging portion 33e of the clutch arm 33 of the power transmission mode switching mechanism 9 is engaged with the recess 35b of the resistance spring 35. In addition, in the state in which the engaging portion 33e is engaged with the recess 35b, since the engaging hook 34b of the clutch pawl 34 is not engaged with the ratchet teeth 19b of the ring member 19, the ring member 19 is freely rotated. For this reason, a torque transmission path (a path for low speed and high torque transmission, as described blow) is interrupted between the sun gear member 20 and the carrier gear 17.

Meanwhile, as the rotary shaft 32 comes in contact with the right end of the guide hole 11g, the clutch gear 31 is positioned at the rightmost position. At the rightmost position, the clutch gear 31 is disengaged from the external teeth 17b of the carrier gear 17. For this reason, a torque transmission path (a path for low speed and high torque transmission, as described blow) is interrupted between the clutch gear 31 and the carrier gear 17.
Therefore, the power interruption mode is a mode in which the spool 4 is not connected to the motor 6, the rotational torque of the motor 6 is not transmitted to the spool 4, and the rotational torque of the spool 4 is not transmitted to the motor 6. That is, the power interruption mode is defined as a disconnection state (which corresponds to a 'disconnection state of the power transmission mechanism' in the invention) in which a mechanical connection state (which corresponds to a 'connection state of the power transmission mechanism' in the invention) between the spool 4 and the power transmission mechanism 8 is released. In this state, the spool 4 is completely disengaged from the power transmission mechanism 8 (motor 6), and thus the withdrawal resistance, which is applied to the spool 4 by the power transmission mechanism 8, is lowered. Accordingly, since the spool 4 is easily rotated, the seat belt 3 retracted on the spool 4 is easily withdrawn regardless of the driving or stop of the motor 6.

### (2) The Low Speed Reduction Ratio Power Transmission Mode

As shown in Fig. 7, in the low speed reduction ratio power transmission mode, similar to the power interruption mode, the engaging portion 33e of the clutch arm 33 is engaged with the recess 35b of the resistance spring 35. In addition, in the state in which the engaging portion 33e is engaged with the recess 35b, since the engaging hook 34b of the clutch pawl 34 is not engaged with the ratchet teeth 19b of the ring member 19, the ring member 19 is freely rotated. For this reason, a path for low speed and high torque transmission is interrupted between the sun gear member 20 and the carrier gear 17.

Meanwhile, as the rotary shaft 32 is positioned at the uppermost position (a position closest to the rotary shaft of the spool 4) in the middle of the guide hole 11g, the clutch gear 31 is also positioned at the uppermost position (a position closest to the rotary shaft of the spool 4). At the uppermost position, the clutch gear 31 is engaged with the external teeth 17b of the carrier gear 17. For this reason, a path for high speed and low torque transmission is connected between the clutch gear 31 and the carrier gear 17. That is, the motor 6 is connected to the spool 4 through the motor gear 13, the connector gear 23, the idle gear 29, the upper connector gear 27, the lower connector gear 26, the clutch gear 31, the carrier gear 17, and the connector 14. Therefore, the low speed reduction ratio power transmission mode is set. At the uppermost position of the rotary shaft 32, the rotary shaft 32 enters into the supporting grooves 33c of the clutch arm 33 so as to come in contact with the clutch arm 33.

The low speed reduction ratio power transmission mode is a power transmission mode with a low speed reduction ratio in which the path for high speed and low torque transmission is set. In the low speed reduction ratio power transmission mode, it is possible to rapidly retract the seat belt by driving the motor 6. Both the low speed reduction ratio power transmission mode and the high speed reduction ratio power transmission mode are defined as a connection state in which the spool 4 and the power transmission mechanism 8 are mechanically connected to each other so as to transmit the power of the motor 6 to the spool 4 through the power transmission mechanism 8.
In particular, when the motor 6 is driven and the power transmission mechanism 8 is set to the low speed reduction ratio power transmission mode or the high speed reduction ratio power transmission mode, the power of the motor 6 is transmitted to the spool 4. Furthermore, when the motor 6 is stopped and the power transmission mechanism 8 is set to the low speed reduction ratio power transmission mode or the high speed reduction ratio power transmission mode, high withdrawal resistance is applied to the spool 4 by the power transmission mechanism 8 mechanically connected to the spool 4. Accordingly, it is difficult to withdraw the seat belt 3 from the spool 4 or it is impossible to withdraw the seat belt 3 therefrom.

### (3) The High Speed Reduction Ratio Power Transmission Mode

As shown in Fig. 8, in the high speed reduction ratio power transmission mode, the engaging portion 33e of the clutch arm 33 is disengaged from the recess 35b of the resistance spring 35 and is positioned at the curved portion, which is formed at the upper end of the resistance spring 35 above the recess 35b. In addition, in the state in which the engaging portion 33e is disengaged from the recess 35b, since the engaging hook 34b of the clutch pawl 34 is engaged with the ratchet teeth 19b of the ring member 19 in the clockwise direction, the ring member 19 is not rotated in the clockwise direction. For this reason, a path for low speed and high torque transmission is connected between the sun gear member 20 and the carrier gear 17. That is, the motor 6 is connected to the spool 4 through the motor gear 13, the connector gear 23, the idle gear 29, the external teeth 20b of the sun gear member 20, the sun gear 20a, the planet gears 18, the carrier gear 17, and the connector 14. Therefore, the power transmission path at a high speed reduction ratio is set by a planetary mechanism.

Meanwhile, as the rotary shaft 32 comes in contact with the left end of the guide hole 11g, the clutch gear 31 is positioned at the leftmost position. At the leftmost position, the clutch gear 31 is disengaged from the external teeth 17b of the carrier gear 17. For this reason, a path for high speed and low torque transmission is interrupted between the clutch gear 31 and the carrier gear 17.
In this manner, the high speed reduction ratio power transmission mode is a power transmission mode with high speed reduction ratio in which the path for low speed and high torque transmission is set. In the high speed reduction ratio power transmission mode, the belt is retracted at a high tension by driving the motor 6.

Power transmission mode switching among the power interruption mode, the low speed reduction ratio power transmission mode, and the high speed reduction ratio power transmission mode is performed by the power transmission mode switching mechanism 9. For example, the mode switching is performed according to the following patterns.

### (1) Power Transmission Mode Switching from the Power Interruption Mode to the Low Speed Reduction Ratio Power Transmission Mode

In the power interruption mode shown in Fig. 6, when the motor 6 is rotated in the normal direction (corresponding to the clockwise rotation of the motor rotary shaft 6a in Fig. 6: in the belt retracting direction (the direction β in Fig. 3)), the lower connector gear 26 and the pulleys 25 are rotated in the direction corresponding to the direction β through the motor gear 13, the connector gear 23, the idle gear 29 and the upper connector gear 27. In this case, the clutch gear 31 runs idle due to the clutch gear 31 not being engaged with the external teeth 17b of the carrier gear 17. Furthermore, since the rotary shaft 32 does not receive resistance, the clutch springs 24 are rotated in the same direction as the pulleys 25. For this reason, the clutch gear 31 and the rotary shaft 32 are moved to the left side along the guide hole 11g, and then the rotary shaft 32 comes in contact with the clutch arm 33 as shown in Fig. 7.

At the position in which the rotary shaft 32 comes in contact with the clutch arm 33, the clutch gear 31 and the rotary shaft 32 are positioned at the uppermost position mentioned above, and the clutch gear 31 is engaged with the external teeth 17b of the carrier gear 17. For this reason, the torque of the clutch gear 31 is transmitted to the carrier gear 17 and then the carrier gear 17 is rotated. In this case, if there is a slack on the seat belt 3, the seat belt 3 is retracted on the spool 4 by the rotation of the carrier gear 17. If the slack is removed, the spool 4 is not rotated, whereby the carrier gear 17 is also not rotated. For this reason, the clutch gear 31 is also not rotated due to the resistance from the carrier gear 17.

However, since the lower connector gear 26 is rotated by the rotational torque of the motor 6, a force is applied to the rotary shaft 32 toward the leftmost position due to the rotational torque of the lower connector gear 26. In this case, since the rotary shaft 32 comes in contact with the clutch arm 33, the rotary shaft 32 presses the clutch arm 33 due to a pressing force that is generated by the rotary shaft 32. However, at this time, since the tension of the seat belt 3 is smaller than a predetermined value, a moment for rotating the clutch arm 33 in the clockwise direction due to the pressing force of the rotary shaft 32 is smaller than a moment against the moment in the clockwise direction due to the engaging force between the engaging portion 33e and the recess 35b. Therefore, the engaging portion 33e is not disengaged from the recess 35b so that the clutch arm 33 is not rotated. Accordingly, the rotary shaft 32 is stopped at the position in which the clutch arm 33 comes into contact with the clutch arm 33.

With stopping of the rotary shaft 32, the clutch gear 31 and the rotary shaft 32 are held at the uppermost position described above in Fig. 7. When the clutch gear 31 is held at the uppermost position, the clutch gear 31 is engaged with the external teeth 17b of the carrier gear 17, and the path for high speed and low torque transmission is connected between the clutch gear 31 and the carrier gear 17. Since the clutch arm 33 is not rotated, the clutch pawl 34 is also not rotated so that the engaging hook 34b is held at a position in which the clutch pawl 34 is not engaged with the ratchet teeth 19b. For this reason, the ring member 19 becomes free, and the path for low speed and high torque transmission is kept to be disconnected between the sun gear member 20 and the carrier gear 17.
In this manner, the power transmission mechanism 8 is switched from the power interruption mode to the low speed reduction ratio power transmission mode so that the power transmission mechanism 8 is set in the low speed reduction ratio power transmission mode.

### (2) Power Transmission Mode Switching from the Low Speed Reduction Ratio Power Transmission Mode to the High Speed Reduction Ratio Power Transmission Mode

The high speed reduction ratio power transmission mode is set through a relatively high rotational torque of the motor 6. In this case, the high speed reduction ratio power transmission mode is set from the power interruption mode through the low speed reduction ratio power transmission mode.
The power interruption mode is switched to the low speed reduction ratio power transmission mode in the same way as described above. However, the tension of the seat belt 3 is larger than the predetermined value at the time of setting the high speed reduction ratio power transmission mode. Accordingly, in the low speed reduction ratio power transmission mode shown in Fig. 7, the moment applied to the clutch arm 33 due to the pressing force of the rotary shaft 32 is larger than the moment against the moment in the clockwise direction due to the engaging force between the engaging portion 33e and the recess 35b. Therefore, the engaging portion 33e can be disengaged from the recess 35b.

Accordingly, when the clutch springs 24 are further rotated in the counter-clockwise direction, the rotary shaft 32 rotates the clutch arm 33 about the supporting shaft 11h in the clockwise direction and the rotary shaft 32 is moved to the left side along the guide hole 11g. For this reason, the clutch gear 31 is further moved to the left side. When the rotary shaft 32 comes into contact with the left end of the guide hole 11g, the rotary shaft 32 is not moved further so that the clutch gear 31, the rotary shaft 32, and the clutch springs 24 are stopped. Therefore, as shown in Fig. 8, the clutch gear 31 and the rotary shaft 32 are positioned at the leftmost position. At the leftmost position, the clutch gear 31 is disengaged from the external teeth 17b of the carrier gear 17 so that the path for high speed and low torque transmission is interrupted between the clutch gear 31 and the carrier gear 17.

Meanwhile, when the clutch pawl 34 is rotated about the clutch pawl pin 38 in the counter-clockwise direction in conjunction with the rotation of the clutch arm 33, the clutch pawl 34 is positioned at a position in which the engaging hook 34b can be engaged with the ratchet teeth 19b as shown in Fig. 8. In this case, since the sun gear member 20 is rotated by the rotational torque of the motor 6 and the ring member 19 is also rotated in the clockwise direction, the ratchet teeth 19b are engaged with the engaging hook 34b. Accordingly, the rotation of the ring member 19 is stopped, and the path for low speed and high torque transmission is connected between the sun gear member 20 and the carrier gear 17.
In this manner, the power transmission mechanism 8 is switched from the low speed reduction ratio power transmission mode to the high speed reduction ratio power transmission mode so as to be set in the high speed reduction ratio power transmission mode.

### (3) Power Transmission Mode Switching from the High Speed Reduction Ratio Power Transmission Mode to the Power Interruption Mode (through the low speed reduction ratio power transmission mode)

In the high speed reduction ratio power transmission mode shown in Fig. 8, when the motor 6 is rotated in the reverse direction (corresponding to the counter-clockwise rotation of the motor rotary shaft 6a in Fig. 6: in the belt withdrawing direction (the direction α in Fig. 3)), the lower connector gear 26 and the pulleys 25 are rotated in the direction opposite to the direction mentioned above. Then, since the clutch springs 24 are also rotated in the direction opposite to the direction mentioned above, the clutch gear 31 and the rotary shaft 32 are moved to the right side along the guide hole 11g while the clutch arm 33 is rotated in the counter-clockwise direction.

Since the clutch pawl 34 is rotated in the clockwise direction in conjunction with the counter-clockwise rotation of the clutch arm 33, the clutch pawl 34 is positioned at a disengaging position not being engaged with the ratchet teeth 19b. Therefore, the ring member 19 is freely rotated, and the path for low speed and high torque transmission is interrupted.

When the clutch gear 31 and the rotary shaft 32 are positioned at the uppermost position mentioned above, the clutch gear 31 is engaged with the external teeth 17b of the carrier gear 17 so as to temporarily be in the low speed reduction ratio power transmission mode shown in Fig. 7. However, since the clutch gear 31 and the rotary shaft 32 are continuously moved to the right side, the clutch gear 31 is disengaged from the external teeth 17b and runs idle. Accordingly, the path for high speed and low torque transmission is temporarily connected, however, is immediately interrupted. In addition, when the path for high speed and low torque transmission is temporarily connected, the spool 4 is temporarily rotated in the belt withdrawing direction α, however, is immediately stopped due to the reverse rotation of the motor 6.

When the rotary shaft 32 comes into contact with the right end of the guide hole 11g, the rotary shaft 32 is not moved further so that the clutch gear 31, the rotary shaft 32, and the clutch spring 24 are stopped. Therefore, the clutch gear 31 and the rotary shaft 32 are positioned at the rightmost position shown in Fig. 6.
In this manner, the power transmission mechanism 8 is switched from the high speed reduction ratio power transmission mode to the power interruption mode so that the power transmission mechanism 8 is set in the power interruption mode.

In the above-mentioned embodiment, the power transmission mechanism 8 is switched by controlling the rotation of the motor 6.
Specifically, in the low speed reduction ratio power transmission mode, the motor 6 is controlled so as to be rotated in the normal direction so that the power interruption mode is switched to the low speed reduction ratio power transmission mode and then the low speed reduction ratio power transmission mode is continued. Meanwhile, the motor 6 is controlled to be rotated in the reverse direction so that the low speed reduction ratio power transmission mode is switched to the power interruption mode. Thus, the low speed reduction ratio power transmission mode is released. In this case, when the motor 6 is controlled so as to be rotated in the reverse direction so that the power transmission mechanism 8 is switched from the connection state (the low speed reduction ratio power transmission mode) to the disconnection state (the power interruption mode), the power transmission mechanism 8 is switched from the connection state (the low speed reduction ratio power transmission mode) to the disconnection state (the power interruption mode) by a rotational speed difference between the motor 6 and the spool 4.
In addition, in the high speed reduction ratio power transmission mode, the motor 6 is controlled so as to be rotated in the reverse direction so that the low speed reduction ratio power transmission mode is switched to the high speed reduction ratio power transmission mode and then the high speed reduction ratio power transmission mode is continued. Meanwhile, the motor 6 is controlled so as to be rotated in the normal direction so that the high speed reduction ratio power transmission mode is switched to the low speed reduction ratio power transmission mode. Thus, the high speed reduction ratio power transmission mode is released.

Furthermore, the seat belt retractor 1 of the embodiment has the following seven modes of the seat belt 3.

### (1) Belt Storage Mode

The belt storage mode is a mode in which the seat belt 3 is not used and fully retracted on the spool 4. In the belt storage mode, the motor 6 of the seat belt retractor 1 is not driven and the power transmission mechanism 8 is set in the power interruption mode. Therefore, a very small belt tension acts on the seat belt 3 (which will be described in the description of a belt retracting mode to be described below) and the power consumption is zero.

### (2) Belt Withdrawing Mode

The belt withdrawing mode is a mode in which the seat belt 3 is withdrawn from the spool 4 to be fastened. In the belt withdrawing mode, the seat belt retractor 1 is set in the power interruption mode. Therefore, small force is enough for withdrawing the seat belt 3. In this mode, the motor 6 is not driven and the power consumption is zero.

### (3) Belt Retracting Mode for Fitting

The belt retracting mode for fitting is a mode in which an excessively withdrawn amount of the seat belt 3 is retracted to fit the seat belt 3 about an occupant. The belt retracting mode is operated after the seat belt 3 is withdrawn and the tongue (the tongue 62 in Fig. 1) is inserted into and latched with the buckle to turn on the buckle switch (the buckle switch 66a in Fig. 1), or when the occupant moves from the normal used state of the seat belt 3 (buckle switch is ON) so that a predetermined amount of the seat belt 3 is withdrawn and then the occupant returns to the normal used state. In the belt retracting mode for fitting, the motor 6 of the seat belt retractor 1 is driven in the belt retracting direction and the power transmission mechanism 8 is set in the low speed reduction ratio power transmission mode. Therefore, the seat belt 3 is rapidly retracted with low torque, and the motor 6 is stopped at the time of occurrence of a very small belt tension so that the seat belt 3 is fastened about the occupant.

### (4) Normal Fastening Mode (Comfort Mode)

The normal fastening mode (comfort mode) is a mode in which the seat belt 3 is in the normal fastening state, and which is set after the completion of the belt retracting mode for fitting. In the normal fastening mode, the motor 6 of the seat belt retractor 1 is not driven and the power transmission mechanism 8 is set in the power interruption mode. Therefore, since very small tension acts on the seat belt 3, the occupant does not feel discomfort even when fastening the seat belt 3. In addition, the power consumption is zero.

### (5) Warning Mode

The warning mode is a mode in which a driver's doze or an obstacle in front of the vehicle is detected during the drive of the vehicle in the normal fastening mode, and then the retracting action of the seat belt 3 is repeated a predetermined number of times so as to warn the driver. In the warning mode, the motor 6 of the seat belt retractor 1 is set to drive repeatedly.
Therefore, a relatively large tension (smaller than the belt tension in an emergency mode to be described below) and a very small tension are alternately applied to the seat belt 3 so that the driver is warned about the doze or the obstacle in front of the vehicle.

### (6) Emergency Mode

The emergency mode is a mode to be set when the vehicle is highly in danger of colliding with an obstacle during the drive of the vehicle in the normal fastening mode, and has two stages as follows.

### (i) Initial Stage

In the initial stage of the emergency mode, the motor 6 of the seat belt retractor 1 is rotated in the normal direction with relatively high rotational torque. Accordingly, the clutch springs 24 are rotated in the power interruption mode so that the clutch gear 31 and the rotary shaft 32 are moved to the above-mentioned uppermost position. Then the clutch gear 31 is engaged with the external teeth 17b of the carrier gear 17. At this moment, the slack of the seat belt 3 is removed and the tension of the seat belt 3 becomes smaller than a predetermined value. Accordingly, the resistance from the carrier gear 17 to the clutch gear 31 is relatively small. For this reason, even though the rotational torque of the motor 6 is relatively high, the rotary shaft 32 does not rotate the clutch arm 33. Therefore, the power transmission mechanism 8 is set in the low speed reduction ratio power transmission mode. As a result, the torque of the clutch gear 31 is transmitted to the carrier gear 17 to rotate the carrier gear 17, and the seat belt 3 is rapidly withdrawn with the low torque to rapidly remove the slack of the seat belt 3.

### (ii) Late Stage

When the slack of the seat belt 3 is removed in the above-mentioned initial stage, the emergency mode proceeds to the late stage from the initial stage. In the late stage, as the tension of the seat belt 3 exceeds the predetermined value, the resistance applied to the clutch gear 31 from the carrier gear 17 becomes relatively large. Accordingly, the carrier gear 17 and the clutch gear 31 are not rotated. However, since the lower connector gear 26 is to be rotated by the rotational torque of the motor 6, force is applied to the rotary shaft 32 in the direction toward the leftmost position by the rotational torque of the lower connector gear 26. In this case, since the rotational torque of the motor 6 is relatively high, the moment for rotating the clutch arm 33 in the clockwise direction by the pressing force of the rotary shaft 32 is larger than the moment against the moment in the clockwise direction by the engaging force between the engaging portion 33e and the recess 35b. Therefore, the engaging portion 33e of the clutch arm 33 is disengaged from the recess 35b of the resistance spring 35, and then the rotary shaft 32 is moved to the above-mentioned leftmost position while rotating the clutch arm 33. Since the clutch pawl 34 is rotated in conjunction with the rotation of the clutch arm 33, the engaging hook 34b of the clutch pawl 34 is engaged with the ratchet teeth 19b so that the ring member 19 is not rotated. For this reason, the power transmission mechanism 8 is set in the high speed reduction ratio power transmission mode. Therefore, the seat belt 3 is retracted with high torque so as to restrain the occupant with extremely large belt tension.

### (7) Belt Retracting Mode for storage

The belt retracting mode for storage is a mode in which the seat belt 3 is fully retracted so as to be stored when the buckle switch is turned off by pulling out the tongue (the tongue 62 in Fig. 1) from the buckle for taking off the seat belt 3. In the belt retracting mode for storage, the motor 6 of the seat belt retractor 1 is driven in the belt retracting direction with relatively low rotational torque, and the power transmission mechanism 8 is set in the low speed reduction ratio power transmission mode. Therefore, the seat belt 3 is rapidly retracted with low torque.
Then, the seat belt 3 is fully retracted and the motor 6 is stopped at the time of occurrence of a very small belt tension so that the seat belt 3 is set in the belt storage mode with very small belt tension on the seat belt 3.

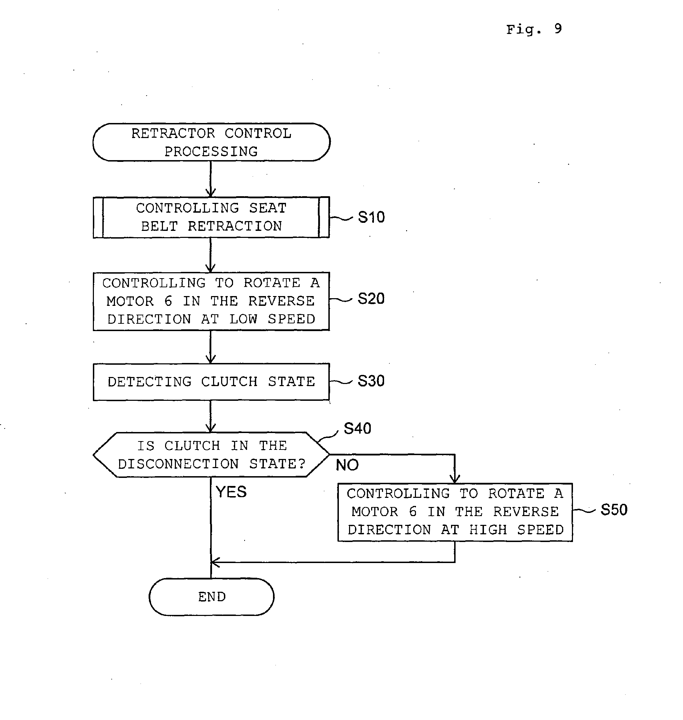

In the belt retracting mode for storage, the motor 6 is controlled to be rotated in the reverse direction so that the power transmission mechanism 8 is switched from the connection state (the low speed reduction ratio power transmission mode) to the disconnection state (the power interruption mode) after the retraction of the seat belt 3 for storage as described above. In this case, the power transmission mechanism 8 is switched from the connection state (the low speed reduction ratio power transmission mode) to the disconnection state (the power interruption mode) by rotational speed difference between the motor 6 and the spool 4. In the present embodiment, when the power transmission mechanism 8 is switched from the connection state to the disconnection state, the motor 6 is controlled to be rotated in the reverse direction at low speed in order to reduce the operational sound caused by the idle running of the motor 6. Since a control unit (the ECU 68 in Figs. 1 and 2) performs, for example, 'retraction control processing' shown in Fig. 9, the motor can be controlled. Here, a flow chart of the retraction control processing according to the present embodiment is shown in Fig. 9.

First, the retraction control (storage control) of the seat belt is performed in the step S10 of the retraction control processing shown in Fig. 9. In the retraction control of the seat belt, the motor 6 is controlled to be rotated in the normal direction so that the power transmission mechanism 8 is set in the low speed reduction ratio power transmission mode. Then, the withdrawn seat belt 3 is rapidly retracted (stored) on the spool 4 with low torque. In this case, a 'first direction' of the invention corresponds to a normal rotational direction in which the motor 6 is rotated to retract the seat belt 3 on the spool 4.

Next, in a step S20, the motor 6 is controlled to be rotated in the reverse direction at low speed so that the power transmission mechanism 8 is switched from the connection state (the low speed reduction ratio power transmission mode) to the disconnection state (the power interruption mode). The reverse rotational direction of the motor 6 corresponds to a 'second direction opposite to the first direction' of the invention. In this case, the speed (low speed) of the motor 6 is defined as a speed useful in reducing the operational sound, which is caused by the switching operation of the power transmission mechanism 8, and can be properly set in accordance with the assumed operational sound level. The speed (low speed) corresponds to 'operational sound reducing speed' of the invention. Accordingly, it is possible to reduce the operational sound when the power transmission mechanism 8 is switched from the connection state (the low speed reduction ratio power transmission mode) to the disconnection state (the power interruption mode). In addition, the operational sound reducing speed may have a specific speed value or may have any speed values within the predetermined speed range.

In the switching operation of the power transmission mechanism 8 in the step S20, it is assumed that the occupant applies a tensile force to the seat belt 3 and thus the spool 4 is rotated in the belt retracting direction. In this case, since the rotational speed difference between the motor 6 and the spool 4 does not occur sometimes, the power transmission mechanism 8 is not switched from the connection state (the low speed reduction ratio power transmission mode) to the disconnection state (the power interruption mode) sometimes.

Consequently, in a step S30, the state (referred to as a clutch state) of the power transmission mechanism 8 is detected so as to confirm whether the switching operation of the power transmission mechanism 8 is completed in the step S20. Specifically, when the motor 6 is operated, a motor current value is detected (measured). Then, whether the power transmission mechanism 8 is in the connection state or the disconnection state is detected on the basis of the motor current value. The motor current value is detected by the motor current detector 69 (corresponding to a 'detecting unit' or a 'motor ammeter' of the invention) shown in Fig. 2.

If the motor current value detected in the step S30 is larger than a specified value (corresponding to a 'reference current value' of the invention), load of the motor is relatively high. Accordingly, in a step S40, it is discriminated that the power transmission mechanism 8 is in the connection state (clutch connection state) (NO in the step S40), and the procedure proceeds to a step S50. In the meantime, if the motor current value detected in the step S30 is smaller than the specified value, it is discriminated that the power transmission mechanism 8 is in the disconnection state (clutch disconnection state) (YES in the step S40) where the load of the motor is relatively low, and the procedure is directly terminated. The specified value (reference current value) is properly set on the basis of the motor current value when the power transmission mechanism 8 is in the connection state, or the motor current value when the power transmission mechanism 8 is in the disconnection state.

Next, in a step S50, the motor 6 is controlled to be rotated in the reverse direction at higher speed than the speed in the step S20 so that the power transmission mechanism 8 is completely switched to the disconnection state (the power interruption mode). The speed (higher speed) corresponds to 'speed higher than the operational sound reducing speed' of the invention. Accordingly, it is possible to reliably switch the power transmission mechanism 8 to the disconnection state (the power interruption mode).

According to the seat belt retractor 1 of the present embodiment, if at least the step S10 and the step S20 are performed for the retraction control processing shown in Fig. 9, it is possible to reduce the operational sound, which is caused by the disconnection operation of the power transmission mechanism 8. Accordingly, the invention is enough as long as the control corresponding to at least the step S10 and the step S20 are performed.
Further, it is possible to reduce the operational sound, which is caused by the disconnection operation of the power transmission mechanism 8, by performing the step S30 to the step S50. Furthermore, after it is assumed that the occupant applies a tensile force to the seat belt 3 and thus the spool 4 is rotated in the belt withdrawing direction, it is possible to reliably perform the disconnection operation of the power transmission mechanism 8.

In addition, according to the seat belt retractor 1 of the present embodiment, the motor current detector 69 for detecting the current value of the motor 6 is used as a unit for detecting whether the power transmission mechanism 8 is in the connection state or the disconnection state. Therefore, it is possible to simplify the structure thereof.

Moreover, according to the seat belt retractor 1 of the present embodiment, since the two power transmission paths are set in the power transmission mechanism 8, it is possible to achieve two retracting performances that include rapid retraction of the seat belt for removing the slack of the seat belt 3, and retraction of the seat belt with high torque for restraining the occupant. The two power transmission paths include the low speed reduction ratio power transmission mode, which is caused by the path for high speed and low torque transmission, and the high speed reduction ratio power transmission mode, which is caused by the path for low speed and high torque transmission.

Furthermore, since the torque of the motor 6 is efficiently transmitted to the spool 4 by the two power transmission paths, it is possible to rapidly achieve the two retracting performances with limited power consumption. In addition, since the retraction of the seat belt with high torque is performed by the path for low speed and high torque transmission, it is possible to reduce the rotational torque of the motor 6 as compared with a device in related art. For this reason, it is possible to reduce the power consumption of the motor 6 and to use a smaller motor, thereby making the seat belt retractor 1 compact.
Moreover, since the above-mentioned two retracting performances can be achieved, the seat belt retractor 1 can have a pre-tensioning function using the rotational torque of the motor 6. Therefore, it is possible to eliminate a pre-tensioner using reaction gas for the seat belt retractor in the related art, thereby reducing manufacturing cost thereof.

In addition, the power transmission mechanism 8 is set in the low speed reduction ratio power transmission mode or the high speed reduction ratio power transmission mode according to the tension of the seat belt 3. Accordingly, it is easy to switch the modes without controlling the rotational torque of the motor 6.
Further, the power transmission mechanism 8 has the power interruption mode in which the rotational torque of the motor 6 is not transmitted to the spool. Accordingly, the withdrawing of the seat belt 3, the normal fastening of the seat belt 3 without discomfort for the occupant, and the storage of the seat belt 3 when not used can be performed regardless of the motor 6.

Furthermore, since the retracting operation of the seat belt 3 for storage is performed only by the rotational torque of the motor 6, it is possible to eliminate or reduce the urging force without an additional module such as a tension reducer. The urging force is caused by the retracting element such as a spiral spring, and always acts on the seat belt 3 in the belt retracting direction.
In this case, even though the urging force by the retracting element is set in a minimum range for fitting the seat belt 3 to the occupant when the occupant puts on the seat belt 3, it is possible to reliably retract the seat belt 3 for storage so as to assist the retracting of the seat belt 3 by transmitting the torque of the motor 6 to the spool 4 in the low speed reduction ratio power transmission mode.

Since the high reduction ratio mechanism 7a is formed of the planetary mechanism, the path for low speed and high torque transmission can be made compact. For this reason, even though the power transmission mechanism 8 has both the low speed reduction ratio power transmission mode and the high speed reduction ratio power transmission mode, it is possible to effectively reduce the size of the seat belt retractor 1.

Furthermore, since a carrier of the high reduction ratio mechanism 7a and the external teeth 17b of the low reduction ratio mechanism 7b are formed of the single common carrier gear 17, the number of parts can be reduced, thereby making the seat belt retractor compact.
In addition, the power transmission mode switching mechanism 9 controls the rotation of the internal gear 19a of the planetary mechanism and the engagement between the small diametric clutch gear 31 and the external teeth 17b of the large diametric carrier gear 17 according to the tension of the seat belt 3, thereby making it easy to switch the power transmission modes.

Furthermore, the invention is not limited to the embodiment, and may have various applications and modifications. For example, there may be following another embodiments using the embodiment.

In another embodiment, as a unit for detecting whether the power transmission mechanism 8 is in the connection state or the disconnection state, a sensor such as a hole IC can be used instead of the motor current detector 69. Specifically, as structure using the hole IC, it is possible to employ structure for monitoring the state of the clutch by a magnetic element (magnet) and a magnetic hole sensor (hole IC) in conjunction with the operation of the clutch.

Although structure of the seat belt retractor 1 to be mounted on a vehicle is disclosed in the embodiment, the retractor according to the invention is used in a seat belt device mounted on the vehicle for transporting occupants, for example an automobile, an airplane, a ship, an electric train, etc., and can be properly used in a seat belt device for retracting a seat belt by a seat belt motor to restrain the occupants.

## Claims

1. A seat belt retractor comprising:
a spool that retracts and withdraws a seat belt;
an electric motor;
a power transmission mechanism that is interposed between the electric motor and the spool, and that forms a connection state in which the electric motor and the spool are connected to each other and a disconnection state in which the connection state is released; and
a control unit that controls the electric motor and the power transmission mechanism,
wherein in the connection state of the power transmission mechanism, when the electric motor is driven to be rotated in a first direction, the spool is controlled to be rotated in the seat belt retracting direction so as to retract the seat belt,
when the electric motor is driven to be rotated in a second direction opposite to the first direction so as to switch the power transmission mechanism from the connection state to the disconnection state, the power transmission mechanism is switched from the connection state to the disconnection state by a rotational speed difference between the electric motor and the spool, and
when the power transmission mechanism is switched from the connection state to the disconnection state, the control unit controls the electric motor so that the electric motor is rotated in the second direction at an operational sound reducing speed corresponding to the switching operation.

2. The seat belt retractor according to Claim 1, further comprising:
a detecting unit that detects whether the power transmission mechanism is in the connection state or the disconnection state,
wherein after the control unit controls the electric motor so that the electric motor is rotated in the second direction at the operational sound reducing speed, when it is discriminated that the power transmission mechanism is in the connection state on the basis of the detection result detected by the detecting unit, the control unit controls the electric motor so that the electric motor is rotated in the second direction at a higher speed than the operational sound reducing speed.

3. The seat belt retractor according to Claim 2,
wherein the detecting unit includes a motor current detector for detecting a current value of the electric motor, and
when the current value detected by the motor current detector is larger than a reference current value, the control unit discriminates that the power transmission mechanism is in the connection state.

4. A seat belt device comprising:
a seat belt that is fastened about a vehicle occupant;
a spool that retracts and withdraws a seat belt;
an electric motor;
a power transmission mechanism that is interposed between the electric motor and the spool, and that forms a connection state in which the electric motor and the spool are connected to each other and a disconnection state in which the connection state is released; and
a control unit that controls the electric motor and the power transmission mechanism,
wherein in the connection state of the power transmission mechanism, when the electric motor is driven to be rotated in a first direction, the spool is controlled to be rotated in the seat belt retracting direction so as to retract the seat belt,
when the electric motor is driven to be rotated in a second direction opposite to the first direction so as to switch the power transmission mechanism from the connection state to the disconnection state, the power transmission mechanism is switched from the connection state to the disconnection state by a rotational speed difference between the electric motor and the spool, and
when the power transmission mechanism is switched from the connection state to the disconnection state, the control unit controls the electric motor so that the electric motor is rotated in the second direction at an operational sound reducing speed corresponding to the switching operation.

5. The seat belt device according to Claim 4, further comprising:
a detecting unit that detects whether the power transmission mechanism is in the connection state or the disconnection state,
wherein after the control unit controls the electric motor so that the electric motor is rotated in the second direction at the operational sound reducing speed, when it is discriminated that the power transmission mechanism is in the connection state on the basis of the detection result detected by the detecting unit, the control unit controls the electric motor so that the electric motor is rotated in the second direction at a higher speed than the operational sound reducing speed.

6. The seat belt device according to Claim 5,
wherein the detecting unit includes a motor current detector for detecting a current value of the electric motor, and
when the current value detected by the motor current detector is larger than a reference current value, the control unit discriminates that the power transmission mechanism is in the connection state.

7. A vehicle with a seat belt device:
wherein the seat belt device is the seat belt device according to any one of Claims 4 to 6 mounted in the receiving space of the vehicle.
